# EUROPEAN PATENT SPECIFICATION

(11) **EP 2 814 118 B1**
(45) Date of publication and mention of the grant of the patent: **02.08.2023**
(21) Application number: 14171664.7
(22) Date of filing: 09.06.2014
(51) Int. Cl.: H01R 13/52, H01R 13/453, H01R 13/639

(54) **SOCKET ASSEMBLY**
FASSUNGSANORDNUNG
ENSEMBLE DE DOUILLE

(30) Priority: 12.06.2013 GB 201310413
(43) Date of publication of application: 17.12.2014
(73) Proprietor: Munster Simms Engineering Limited, Bangor, County Down BT19 1LT (GB)
(72) Inventor: Peoples, Andrew, Drumahoe, Londonderry BT47 3BF (GB)
(74) Representative: FRKelly

(56) References cited:
- EP-A1- 1 953 873
- DE-A1-102011 076 927
- DE-U1- 20 302 741
- GB-A- 1 383 022
- JP-A- 2004 214 064
- US-A- 4 793 818
- US-A- 5 165 042
- US-A- 6 031 183
- US-B1- 6 372 987

## Description

### Field of the Invention

The present invention relates to plug and socket assemblies. The invention relates particularly but not exclusively to plug and socket assemblies for use with caravans, mobile homes and recreational vehicles.

### Background to the Invention

Buildings or vehicles, for example caravans, mobile homes and recreational vehicles, may have externally accessible sockets for connection to an external utility such as an electricity supply, water supply or gas supply. Such sockets conventionally include a hinged cover to protect the socket when not in use. However, conventional hinged covers have a tendency to break if left open. Also, they are typically held closed by a catch which is susceptible of breaking. When the catch breaks the cover flaps when the vehicle moves, or in the wind, and so does not adequately protect the socket.

EP 1953873, GB1383022, US5165042, US4793818, US6372987, US6031183 and JP 2004214064 are patent documents that disclose socket assemblies with sliding covers. It is desirable therefore to provide an improved socket assembly.

### Summary of the Invention

The invention provides a plug and socket assembly as claimed in claim 1.

Typically, the cover is substantially planar in shape. The preferred cover is movable between said open and closed states in a direction that lies in a plane that is substantially coincident with or substantially parallel with a plane in which said mouth lies. In preferred embodiments, the cover is disposed substantially in a plane that is substantially coincident with or substantially parallel with a plane in which said mouth lies.

In preferred embodiments, the assembly includes a support comprising a frame, for example a substantially U-shaped frame.

The assembly may include first and second slidable couplings comprising respective slidably interengageable male and female parts. Typically, one of said male and female parts is provided on said cover, the other being provided on said body, said at least one female part typically being provided on said body and said at least one male part typically being provided on said cover. The cover may be flexible and resilient to hold, in use, said male and female parts in inter-engagement.

In typical embodiments the body includes a portion surrounding said mouth, said mouth surrounding portion having a substantially flat reverse face.

Other preferred features are recited in the dependent claims appended hereto.

In preferred embodiments, the cover is less prone to damage than conventional hinged covers and is easier to replace since the old one can be slidably removed and a new one slidably fitted (without the need to remove the body from the wall). Moreover, the cover does not flap in the wind or when, for example, a vehicle is moving. The preferred cover is also well suited to being fixed to a surface by adhesive.

Further advantageous aspects of the invention will become apparent to those ordinarily skilled in the art upon review of the following description of a specific embodiment and with reference to the accompanying drawings.

### Brief Description of the Drawings

An embodiment of the invention is now described by way of example and with reference to the accompanying drawings in which:
Figure 1 is a perspective view of a socket assembly embodying the invention shown with a cover in a closed state;
Figure 2 is a perspective view of the socket assembly of Figure 1 shown with the cover in an open state;
Figure 3 is a perspective view of the socket assembly of Figure 1 shown with the cover in the open state and with an inserted connector;
Figure 4 is a side view of the socket assembly of Figure 1 shown with the cover in the open state and with the inserted connector;
Figure 5 is a front view of the socket assembly of Figure 1, shown without the cover;
Figure 6 is a side view of the socket assembly of Figure 1, shown without the cover;

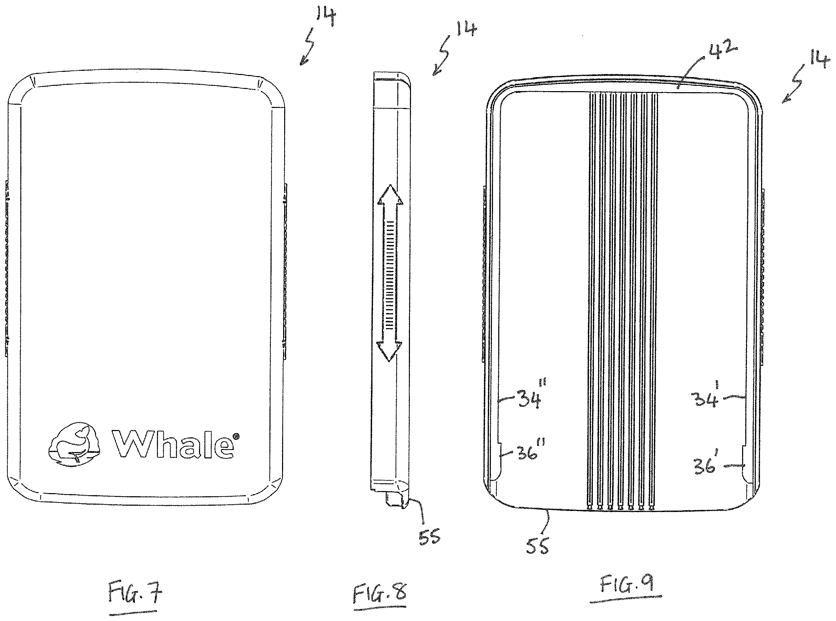

Figure 7 is a front view of the cover of the socket assembly of Figure 1;
Figure 8 is a side view of the cover of the socket assembly of Figure 1; and
Figure 9 is a rear view of the cover of the socket assembly of Figure 1.

### Detailed Description of the Drawings

Referring now to the drawings, there is shown generally indicated as 10 a socket assembly embodying the invention. The socket assembly 10 comprises a body 12 and a cover 14. The body 12 is shaped to define a socket 16 for receiving a corresponding plug 18. The body 12 includes connection means, for example one or more connectors 20, for connection to a separate device (not shown) as is described in more detail hereinafter. The plug 18 includes connection means, for example one or more connectors 22 for connection to the connection means of the socket 16 when the plug 18 is received by the socket 16. The respective connection means 20, 22 may comprise any suitable conduit(s) for carrying a utility resource and to allow the resource to be passed through the socket assembly 10 when the plug 18 is received by the socket 16. For example, where the utility resource is gas or liquid the conduit(s) may comprise one or more hollow channel for connection to a pipe, hose, cable or other compatible device. Where the utility resource is electricity, the conduit(s) may comprise one or more electrical conductor, e.g. electrical wire(s). In the illustrated example, it is assumed that the socket assembly 10 is intended to carry liquid, e.g. water, and so the connection means 20, 22 comprise one or more hollow connectors for connection to a respective pipe or hose (not shown). It will be apparent that the socket 16 and plug 18 may take any shape and/or configuration suitable for the relevant application.

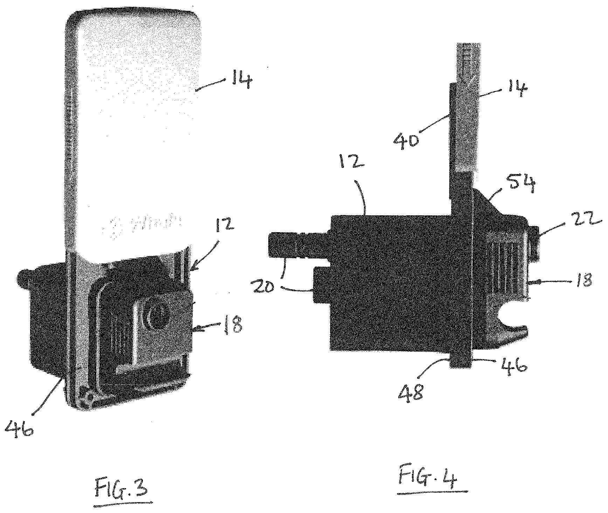

In typical applications, the socket assembly 10 is used to carry the utility resource from an external source (not shown), such as a water supply, gas supply or electricity supply, to a vehicle, building or other structure (not shown) on which it is installed. The socket assembly 10 is typically mounted on a wall 24 (Figure 3) of the building, vehicle or other structure, usually an external wall, but may be mounted on any other suitable structure. The connection means 22 of the plug 18 is connected to the utility resource by one or more pipe, hose, cable or the like, while the connector 20 of the socket 16 is connected to one or more device or system (not shown) of the vehicle, building or other structure (e.g. a water supply system, a heating system or an electricity system) by one or more pipe, hose, cable or the like. Alternatively, the opposite arrangement may be adopted so that the resource is directed out of the vehicle, building or other structure via the socket assembly 10. Alternatively still the socket assembly 10 may be configured for bi-directional flow of the relevant resource through the socket 10.

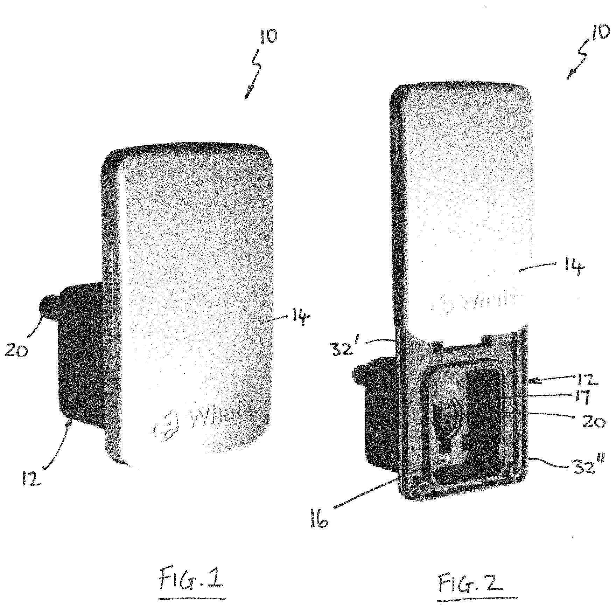

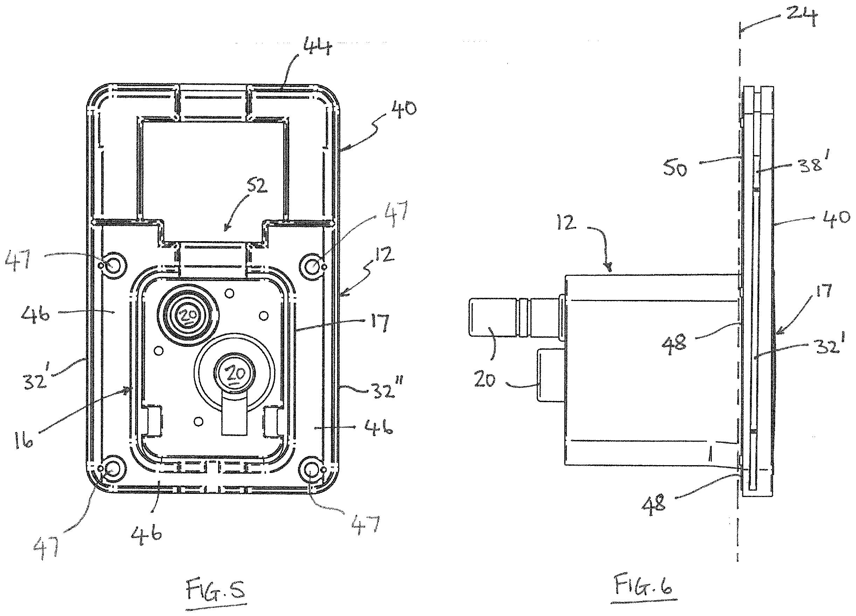

The cover 14 is slidably mounted on the body 12 and is movable between an open state (Figure 2) in which the socket 16 is exposed to allow the plug 18 to be connected to or disconnected from the socket 16, and a closed state (Figure 1) in which it covers the socket 16. In preferred embodiments, the cover 14 completely covers the socket 16 in the closed state. The preferred arrangement is such that the cover 14 is movable with respect to the body in a plane that is substantially in or parallel with the plane in which the mouth 17 of the socket 16 lies. In use, and as illustrated in Figure 6, when the socket assembly 10 is installed, the mouth 17 of the socket 16 may lie in a plane that is substantially parallel with the wall 24 and so the cover 14 is movable with respect to the body in a plane that is substantially parallel with the wall 24. Advantageously, the cover 14 is substantially planar in shape and, in preferred embodiments, is substantially disposed in a plane that is substantially in or parallel with the plane in which the mouth 17 lies (when in either the open state or the closed state or in between). In preferred embodiments, when the socket assembly 10 is installed, the cover 14 is disposed substantially parallel with the wall 24 and, typically, is substantially against or adjacent the wall 24 (when in either the open state or the closed state or in between). Hence, the cover 14 is less susceptible to being damaged than a hinged cover which projects from the wall when open.

In preferred embodiments, the cover 14 is coupled to the body 12 by a sliding mechanism comprising inter-engagable male and female parts, one provided on the cover 14 the other provided on the body 12. In the illustrated embodiment, the female part is provided on the body 12, for example comprising one or more grooves 32, and the male part is provided on the cover 14, for example comprising one or more corresponding runners 34 that ride in the groove(s). For example, first and second grooves 32', 32" (or the runners in alternative embodiments) are provided on opposite sides of the body 12, and typically on opposite sides of the socket mouth 17, running parallel with the direction of movement of the cover 14. Correspondingly, first and second runners 34', 34" (or the grooves in alternative embodiments) are provided on opposite sides of the cover 14. Preferably, the cover 14, or at least part of it, is flexible with a resilience that causes the cover to grip the body 12 in order to retain the cover 14 in any of its adoptable positions with respect to the body (i.e. in or between the open and closed states) while allowing the cover 14 to be moved manually between the open and closed states. To this end, the cover 14 may be formed from plastics (as too may be the body 12). In the illustrated embodiment, the male and female parts of the coupling are slidable directly against one another although in alternative embodiments one or more rollers may be provided.

Preferably, the sliding mechanism includes retaining means for retaining the cover 14 on the body 12. Conveniently, the retaining means comprises one or more respective projections 36, 38 provided on each of the male and female parts of the sliding mechanism. In the illustrated embodiment, each groove 32', 32" includes a respective projection 38', 38", and each runner 34', 34" includes a corresponding projection 36', 36". When the cover 14 is mounted on the body 12, the projections 36, 38 are positioned to inter-engage when the cover 14 has reached the open state, or has moved beyond the open state in a direction away from the closed state, to inhibit disengagement of the cover 14 and body 12. However, the preferred resilience of the cover 14 allows the cover 14 to be disengaged from, or fitted to, the body 12 upon application of sufficient manual force.

In preferred embodiments, the body 12 includes a support 40 for carrying the cover 14, the support extending from the socket 16 in the direction of movement of the cover 14. The support 14 is preferably substantially planar in form and is conveniently disposed in a plane that is substantially the same as or substantially parallel with the plane in which the mouth 17 lies. In typical embodiments the support 14 includes at least part of the grooves 32', 32" (or runners as applicable) and is shaped and dimensioned to support the cover 14 at least when the cover 14 is in its open state. Conveniently the support 14 comprises a frame, for example a U shaped frame as illustrated. In preferred embodiments, respective portions of the cover 14 and the support 14 inter-engage when the cover 14 is in its closed state to prevent further movement of the cover 14 in a direction away from the open state. In the illustrated embodiment, respective top portions 42, 44 of the cover 14 and support 40 serve this purpose.

In preferred embodiments, the body 12 includes a portion 46 surrounding the socket 16 and projecting laterally from the socket 16. The portion 46 has a reverse face 48 that is substantially flat to facilitate the application of an adhesive and the adhesion of the assembly 10 to the wall 24. The reverse face 50 of the support 40 is preferably substantially flat for the same reason and, conveniently, lies in substantially the same plane as the reverse face 48.

The socket assembly 10 includes a seat 52 for receiving a corresponding projection 54 provided on the plug 18 when the plug 18 is connected to the socket 16. The seat 52 is defined in a portion of the body 12 adjacent the mouth 17 of the socket, in the path of the cover 14. The arrangement is such that, when the plug 18 is connected to the socket 16, the projection 54 is located in the seat 52 and is located in the path of the cover 14 (in the direction from the open state to the closed state). The cover 14 is movable from the open state towards the closed state to engage with the projection 54 and so to retain the plug 18 in the socket 16. The projection 54 may be shaped to define a seat for receiving the cover 14, in particular the leading edge 55 of the cover 14, in order to facilitate inter-engagement of the cover 14 and projection 54. When it is desired to remove the plug 18 from the socket 16, the cover 14 is first moved towards the open state to release the projection 54. The projection 54 and seat 52 are shaped to inter-engage to help retain the plug in the socket. This may be facilitated by forming one or both of the projection and seat from a resilient material such as plastics.

In preferred embodiments, the body 12, preferably the portion 46, includes at least one and typically a plurality of apertures 47 for receiving a respective screw (not shown) or other fixing. Each aperture 47 is preferably blind, being closed at the reverse face 48 to facilitate the application of adhesive as described above. Advantageously, the apertures 47 are closed by material, e.g. plastics, that is sufficiently thin to allow a screw or other fixing to penetrate it, e.g. by a normal manual screwing action. To this end, the apertures 47 are typically covered by a layer of material that is thinner than the material that forms the rest of the reverse face 48. Hence, the body 12 is amenable not only to being fixed to a surface by adhesive, but also by screws or other fixings.

Not only is the cover 14 less prone to damage than conventional hinged covers, it is easier to replace since the old one can be slidably removed and a new one slidably fitted (without the need to remove the body 12 from the wall 24). Moreover, the cover 14 does not flap in the wind or when a vehicle is moving.

## Claims

1. A plug (18) and socket assembly (10), the socket assembly comprising a body (12) and a cover (14), the body defining a socket (16) for removably receiving the plug, wherein the cover is slidable with respect to the body between an open state, in which it exposes a mouth (17) of said socket to allow insertion or removal of said plug, and a closed state in which it closes said mouth, said body being shaped to define a seat (52) for receiving a corresponding projection (54) provided on said plug when said plug is inserted in said socket, said seat being exposed by said cover when said cover is in said open state **characterised in that** said seat is defined in a portion of the body (12) adjacent the mouth (17) and is located between said cover and said socket when said cover is in said open state, and **in that** said seat is positioned in a path of movement of the cover between the open and closed states, the projection being, when in the seat (52), located in the path of the cover such that said cover is engagable with said plug projection upon moving from said open state to said closed state when said plug is inserted in said socket, and wherein said projection and said seat are shaped to inter-engage to retain said plug in said socket.

2. A plug (18) and socket assembly (10) as claimed in claim 1 wherein said cover (14) is coupled to said body (12) by a sliding mechanism, said sliding mechanism preferably comprising at least one female part (32) and at least one corresponding male part (34) being slidable with respect to one another.

3. A plug (18) and socket assembly (10) as claimed in claim 2 wherein the or each female part comprises a groove (32) and the or each male part comprises a corresponding runner (34) being slidable along a corresponding groove.

4. A plug (18) and socket assembly (10) as claimed in claim 2 or 3 wherein said sliding mechanism is provided on a portion of said body (12) that surrounds said mouth (17).

5. A plug (18) and socket assembly (10) as claimed in any one of claims 2 to 4 wherein said sliding mechanism comprises first and second spaced apart slidable couplings (32, 34), and wherein, preferably, a respective one of said spaced apart slidable couplings is located at a respective one of opposite sides of said mouth (17).

6. A plug (18) and socket assembly (10) as claimed in any preceding claim wherein said body (12) includes a support (40) for carrying said cover (14), said support being located adjacent a portion of said body in which said mouth (17) is formed, and wherein, preferably, said support is substantially planar in shape and is disposed on a plane that is substantially parallel with or substantially coincident with the plane in which said mouth lies.

7. A plug (18) and socket assembly (10) as claimed in claim 6 when dependent on any one of claims 2 to 5 wherein said support (40) carries at least part of said sliding mechanism, preferably at least part of said at least one male part (34) and/or said at least part of at least one female part (32).

8. A plug (18) and socket assembly (10) as claimed in any preceding claim wherein said body (12) has a portion surrounding said mouth (17) and a portion defining said socket body, said mouth portion being substantially perpendicular to said body portion, and wherein, preferably, a reverse face (48) of said mouth-surrounding portion engages in use with a surface of a wall (24), or other structure, when said socket body portion extends through an aperture in said wall or other structure.

9. A plug (18) and socket assembly (10) as claimed in claim 8 as depending on any of claims 6 to 7, wherein said support (40) has a substantially flat reverse face (50), and wherein, preferably, said respective reverse faces (48, 50) are substantially coplanar.

10. A plug (18) and socket assembly (10) as claimed in any preceding claim, wherein the body (12) includes at least one aperture (47) for receiving a respective fixing, each aperture preferably being blind.

11. A plug and socket assembly as claimed in claim 1, wherein said plug projection (54) is shaped to define a seat for receiving a leading portion of said cover (14).

## Patentansprüche

1. Stecker (18) und Fassungsanordnung (10), wobei die Fassungsanordnung einen Körper (12) und eine Abdeckung (14) umfasst, wobei der Körper eine Fassung (16) zur entfernbaren Aufnahme des Steckers definiert, wobei die Abdeckung in Bezug auf den Körper zwischen einem offenen Zustand, in dem sie eine Öffnung (17) der Fassung freilegt, um das Einsetzen oder Entfernen des Steckers zu ermöglichen, und einem geschlossenen Zustand, in dem sie die Öffnung verschließt, verschiebbar ist, wobei der Körper so geformt ist, dass er einen Sitz (52) zum Aufnehmen eines jeweiligen Vorsprungs (54) definiert, der an dem Stecker bereitgestellt ist, wenn der Stecker in die Fassung eingesetzt ist, wobei der Sitz durch die Abdeckung freigelegt ist, wenn sich die Abdeckung in dem offenen Zustand befindet, **dadurch gekennzeichnet, dass** der Sitz in einem Abschnitt des Körpers (12) benachbart zu der Öffnung (17) definiert ist und sich zwischen der Abdeckung und der Fassung befindet, wenn sich die Abdeckung in dem offenen Zustand befindet, und dass der Sitz in einem Bewegungpfad der Abdeckung zwischen dem offenen und dem geschlossenen Zustand angeordnet ist, wobei sich der Vorsprung, wenn er sich in dem Sitz (52) befindet, in dem Pfad der Abdeckung befindet, sodass die Abdeckung mit dem Steckervorsprung in Eingriff gebracht werden kann, wenn sie sich von dem offenen Zustand in den geschlossenen Zustand bewegt, wenn der Stecker in die Fassung eingeführt wird, und wobei der Vorsprung und der Sitz so geformt sind, dass sie ineinander eingreifen, um den Stecker in der Fassung zu halten.

2. Stecker (18) und Fassungsanordnung (10) nach Anspruch 1, wobei die Abdeckung (14) mit dem Körper (12) durch einen Schiebemechanismus gekoppelt ist, wobei der Schiebemechanismus vorzugsweise mindestens einen weiblichen Teil (32) und mindestens einen entsprechenden männlichen Teil (34) umfasst, die in Bezug aufeinander verschiebbar sind.

3. Stecker (18) und Fassungsanordnung (10) nach Anspruch 2, wobei der oder jeder weibliche Teil eine Nut (32) umfasst und der oder jeder männliche Teil einen entsprechenden Läufer (34) umfasst, der entlang einer entsprechenden Nut verschiebbar ist.

4. Stecker (18) und Fassungsanordnung (10) nach Anspruch 2 oder 3, wobei der Schiebemechanismus an einem Abschnitt des Körpers (12) bereitgestellt ist, der die Öffnung (17) umgibt.

5. Stecker (18) und Fassungsanordnung (10) nach einem der Ansprüche 2 bis 4, wobei der Schiebemechanismus eine erste und eine dazu beabstandete zweite verschiebbare Kupplung (32, 34) umfasst und wobei sich vorzugsweise eine jeweilige der beabstandeten verschiebbaren Kupplungen an einer jeweiligen der gegenüberliegenden Seiten der Öffnung (17) befindet.

6. Stecker (18) und Fassungsanordnung (10) nach einem der vorhergehenden Ansprüche, wobei der Körper (12) eine Halterung (40) zum Tragen der Abdeckung (14) beinhaltet, wobei sich die Halterung benachbart zu einem Abschnitt des Körpers befindet, in dem die Öffnung (17) gebildet ist, und wobei die Halterung vorzugsweise eine im Wesentlichen ebene Form aufweist und in einer Ebene angeordnet ist, die im Wesentlichen parallel zu der Ebene verläuft, in der die Öffnung liegt, oder im Wesentlichen mit dieser zusammenfällt.

7. Stecker (18) und Fassungsanordnung (10) nach Anspruch 6 in Abhängigkeit von einem der Ansprüche 2 bis 5, wobei die Halterung (40) mindestens einen Teil des Schiebemechanismus trägt, vorzugsweise mindestens einen Teil des mindestens einen männlichen Teils (34) und/oder den mindestens einen Teil des mindestens einen weiblichen Teils (32).

8. Stecker (18) und Fassungsanordnung (10) nach einem der vorhergehenden Ansprüche, wobei der Körper (12) einen Abschnitt, der die Öffnung (17) umgibt, und einen Abschnitt, der den Fassungskörper definiert, aufweist, wobei der Öffnungsabschnitt im Wesentlichen senkrecht zu dem Körperabschnitt ist, und wobei vorzugsweise eine Rückseite (48) des die Öffnung umgebenden Abschnitts bei der Verwendung mit einer Oberfläche einer Wand (24) oder einer anderen Struktur in Eingriff steht, wenn sich der Fassungskörperabschnitt durch eine Öffnung in der Wand oder der anderen Struktur erstreckt.

9. Stecker (18) und Fassungsanordnung (10) nach Anspruch 8 in Abhängigkeit von einem der Ansprüche 6 bis 7, wobei die Halterung (40) eine im Wesentlichen flache Rückseite (50) aufweist und wobei vorzugsweise die jeweiligen Rückseiten (48, 50) im Wesentlichen koplanar sind.

10. Stecker (18) und Fassungsanordnung (10) nach einem der vorhergehenden Ansprüche, wobei der Körper (12) mindestens eine Öffnung (47) zum Aufnehmen einer jeweiligen Befestigung beinhaltet, wobei jede Öffnung vorzugsweise blind ist.

11. Stecker und Fassungsanordnung nach Anspruch 1, wobei der Steckervorsprung (54) so geformt ist, dass er einen Sitz zum Aufnehmen eines vorderen Abschnitts der Abdeckung (14) definiert.

## Revendications

1. Ensemble (10) fiche (18) et douille, l'ensemble douille comprenant un corps (12) et un couvercle (14), le corps définissant une douille (16) pour recevoir de manière amovible la fiche, dans lequel le couvercle peut coulisser par rapport au corps entre un état ouvert, dans lequel il expose une embouchure (17) de ladite douille pour permettre l'insertion ou le retrait de ladite fiche, et un état fermé dans lequel il ferme ladite embouchure, ledit corps étant conçu pour définir un siège (52) afin de recevoir une saillie correspondante (54) prévue sur ladite fiche lorsque ladite fiche est insérée dans ladite douille, ledit siège étant exposé par ledit couvercle lorsque ledit couvercle est dans ledit état ouvert **caractérisé en ce que** ledit siège est défini dans une partie du corps (12) adjacente à l'embouchure (17) et est situé entre ledit couvercle et ladite douille lorsque ledit couvercle est dans ledit état ouvert, et **en ce que** ledit siège est positionné dans un chemin de déplacement du couvercle entre les états ouvert et fermé, la saillie étant, lorsqu'elle est dans le siège (52), située dans le chemin du couvercle de sorte que ledit couvercle puisse venir en prise avec ladite saillie de fiche lors du passage dudit état ouvert audit état fermé lorsque ladite fiche est insérée dans ladite douille, et dans lequel ladite saillie et ledit siège sont conçus pour s'imbriquer afin de retenir ladite fiche dans ladite douille.

2. Ensemble (10) fiche (18) et douille selon la revendication 1, dans lequel ledit couvercle (14) est couplé audit corps (12) par un mécanisme de coulissement, ledit mécanisme de coulissement comprenant de préférence au moins une partie femelle (32) et au moins une partie mâle (34) correspondante pouvant coulisser l'une par rapport à l'autre.

3. Ensemble (10) fiche (18) et douille selon la revendication 2, dans lequel la ou chaque partie femelle comprend une rainure (32) et la ou chaque partie mâle comprend une glissière (34) correspondante pouvant coulisser le long d'une rainure correspondante.

4. Ensemble (10) fiche (18) et douille selon la revendication 2 ou 3, dans lequel ledit mécanisme de coulissement est prévu sur une partie dudit corps (12) qui entoure ladite embouchure (17) .

5. Ensemble (10) fiche (18) et douille selon l'une quelconque des revendications 2 à 4, dans lequel ledit mécanisme de coulissement comprend des premier et second couplages coulissants espacés (32, 34), et dans lequel, de préférence, un couplage respectif desdits couplages coulissants espacés est situé sur un côté respectif des côtés opposés de ladite embouchure (17).

6. Ensemble (10) fiche (18) et douille selon une quelconque revendication précédente, dans lequel ledit corps (12) comporte un support (40) pour porter ledit couvercle (14), ledit support étant situé adjacent à une partie dudit corps dans laquelle ladite embouchure (17) est formée, et dans lequel, de préférence, ledit support est de forme sensiblement plane et est disposé sur un plan qui est sensiblement parallèle à ou sensiblement coïncident avec le plan dans lequel se trouve ladite embouchure.

7. Ensemble (10) fiche (18) et douille selon la revendication 6 lorsqu'elle dépend de l'une quelconque des revendications 2 à 5, dans lequel ledit support (40) porte au moins une partie dudit mécanisme de coulissement, de préférence au moins une partie de ladite au moins une partie mâle (34) et/ou de ladite au moins une partie d'au moins une partie femelle (32).

8. Ensemble (10) fiche (18) et douille selon une quelconque revendication précédente, dans lequel ledit corps (12) a une partie entourant ladite embouchure (17) et une partie définissant ledit corps de douille, ladite partie d'embouchure étant sensiblement perpendiculaire à ladite partie de corps, et dans lequel, de préférence, une face arrière (48) de ladite partie entourant l'embouchure vient en prise, en utilisation, avec une surface d'une paroi (24), ou une autre structure, lorsque ladite partie de corps de douille s'étend à travers une ouverture dans ladite paroi ou une autre structure.

9. Ensemble (10) fiche (18) et douille selon la revendication 8 dépendant de l'une quelconque des revendications 6 à 7, dans lequel ledit support (40) a une face arrière sensiblement plate (50), et dans lequel, de préférence, lesdites faces arrières (48, 50) respectives sont sensiblement coplanaires.

10. Ensemble (10) fiche (18) et douille selon une quelconque revendication précédente, dans lequel le corps (12) comporte au moins une ouverture (47) pour recevoir une fixation respective, chaque ouverture étant de préférence aveugle.

11. Ensemble fiche et douille selon la revendication 1, dans lequel ladite saillie de fiche (54) est conçue pour définir un siège afin de recevoir une partie avant dudit couvercle (14).
